# EUROPEAN PATENT APPLICATION

(11) **EP 1 260 929 A1**
(43) Date of publication of application: **27.11.2002**
(21) Application number: 02007754.1
(22) Date of filing: 05.04.2002
(51) Int. Cl.: G06K 7/00

(54) **Portable memory storage-retrieval device**

(30) Priority: 23.05.2001 CN 90208398
(71) Applicant: LIH DUO INTERNATIONAL CO., LTD., Wuku Hsiang, Taipei Hsien (TW)
(72) Inventor: Chang, Ting-Chen, Wuku Hsiang, Taipei Hsien (TW)
(74) Representative: Zeitler, Giselher

(57) **Abstract**

A computer memory storage-retrieval device, more specially a portable memory storage-retrieval device mainly comprises a memory built in a storage and retrieval device with a universal serial bus (USB) port connecting joint disposed at the bottom end thereof; the said connecting joint can be directly connected to the USB connecting ports of different computer main units or equipments; once inserted, it is ready for use and requires no additional card reader; furthermore, it can be inserted to support a digital camera, a personal digital assistant (PDA), a digital audio and video player, a digital recorder and a digital video camera for data reading; it goes in and out various electronic products freely, thereby enhances the information user's convenience.

## Description

### BACKGROUND OF THE INVENTION

### 1) FIELD OF THE INVENTION

The present invention relates to a potable memory storage-retrieval device to be carried along and directly connected to universal serial bus (USB) connecting ports of various computer main units for storing and retrieving data at any time and for supporting digital and electronic products, such as a digital camera, a personal digital assistant (PDA), a digital audio and video player as well as a digital video camera.

### 2) DESCRIPTION OF THE PRIOR ART

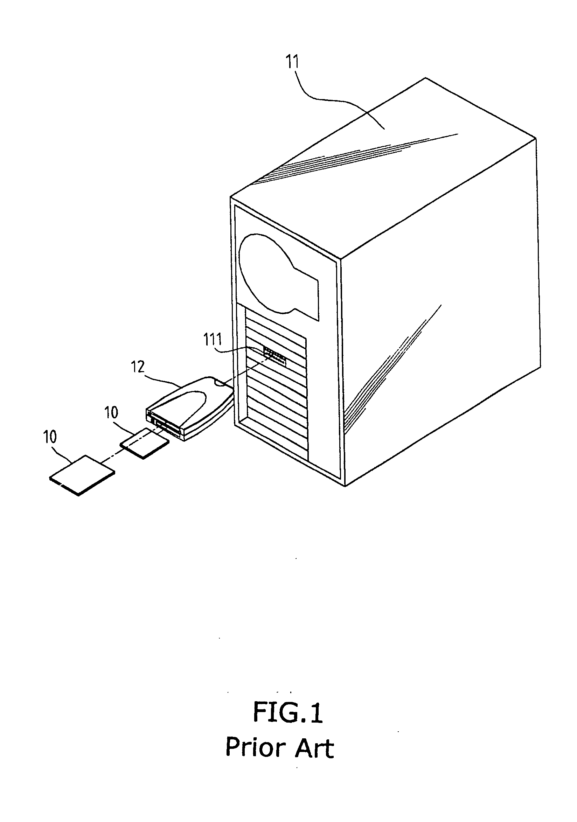

Accordingly, nowadays, personal computers have been extensively applied in the information in the society of engineering and business; all of the jobs considered complicate and inconvenient in the past, such as business correspondence, information communication, document procession, audio and video appreciation, scheduling and memorandum writing can be accomplished through using a computer; at the mean time, the rapid development of Internet enables people to obtain the newest information in the world online; therefore, the importance of the personal computer to the daily life is specifically obvious; however, due to the continuous increase of the data to be processed, the capacity of the data storage of a computer memory has to be continuously increased too for meeting the need; people also request the updated and convenience of the information access due to the unceasing advancement of the high-tech; that stimulated the development and marketing of a portable storage media - the inserted digital memory card; through the memory card, the storage capacity of a computer memory can be increased and data in various forms can be applied on various digital and electronic merchandises, such as a digital camera, a personal digital assistant (PDA), a digital audio and video player and a digital video camera for data reading and allowing people to be able to conveniently obtain the requested data at any time and any place; however, the common memory cards are researched and developed by individual manufacturers and not regulated; wherein, there are inserted digital memory cards, such as compactflash cards (CFC), solid state floppy disk cards (SSFDC), smart media cards (SMC), memory stick cards (MSC), multi-media cards (MMC), secure digital memory card (SDC), etc. of various regulations and functions; all of the various kinds of digital cameras, PDAs, digital music players and digital video cameras available on the market use the built-in or inserted cards for using or increasing the storage memory; since all of the abovementioned memory cards have different regulations, the problem of compatibility has to be considered first in application; furthermore, the memory card (10) has no joint to be compatible with a personal computer and can't be used independently; when being applied to a computer main unit (11), it has to be inserted into an extra memory connector or a card reader (12) first; then through the card reader (12), it is further inserted into the inserting slot (111) of a computer main unit (11) for storing and retrieving data, as shown in FIG. 1; limited by the different regulations of the memory cards, the card readers have to be designed in different regulations accordingly; the user has to purchase card readers in different regulations and that increases the cost, complicates and inconveniences the application.

In view of the various economic and practical inconveniences caused by the shortcomings of the structural design of the conventional portable memory storage and retrieval media, the inventor of the present invention invented a portable memory storage-retrieval device to eliminate the abovementioned shortcomings.

### SUMMARY OF THE INVENTION

Specifically, the present invention of a portable memory storage-retrieval device is oriented to be designed light, delicate and small to facilitate carrying and insertion for use, thereby to be applied to various electronic products; the memory is built in a storage and retrieval device with a universal serial bus (USB) port connecting joint disposed at the bottom end thereof; the said connecting joint can be directly connected to the USB connecting ports of different computer main units or equipments; once inserted, it is ready for use and requires no additional card reader; furthermore, a connecting device is disposed at the top end, on two lateral sides or on the bottom plane for supporting and inserting to a digital camera, a personal digital assistant (PDA), a digital audio and video player, a digital recorder and a digital video camera for data reading; it goes in and out various electronic products freely, thereby enhances the information user's convenience.

Therefore, the primary objective of the present invention is to provide a portable memory storage-retrieval device to be directly connected to the USB connecting ports of various computer main units or equipments; once inserted, it is ready for use, does not require extra card reader, is convenient for use and can reduce the cost.

Another objective of the present invention is to provide a portable memory storage-retrieval device with a memory built in the storage and retrieval device, a connecting device disposed at the top end, on the bottom plane or two lateral side for portable carrying, supporting and inserting to a digital camera, a PDA, a digital music player, a digital recorder and a digital video camera for data reading at any time.

To enable a further understanding of the abovementioned objectives, the technical methods and the specific structural features of the present invention, the brief description of the drawings below is followed by the detailed description of the preferred embodiment.

### BRIEF DESCRIPTION OF THE DRAWINGS

Figure 1 is a pictorial and schematic drawing of a conventional memory storage-retrieval device.
Figure 2 is a pictorial drawing of the present invention.
Figure 3 is a pictorial and assembled drawing of the present invention applied to a computer main unit.
Figure 4 is a schematic drawing of the present invention assembled with a personal digital assistant.
Figure 5 is a schematic drawing of the present invention assembled with a digital music player.

### DETAILED DESCRIPTION OF THE PREFERRED EMBODIMENTS

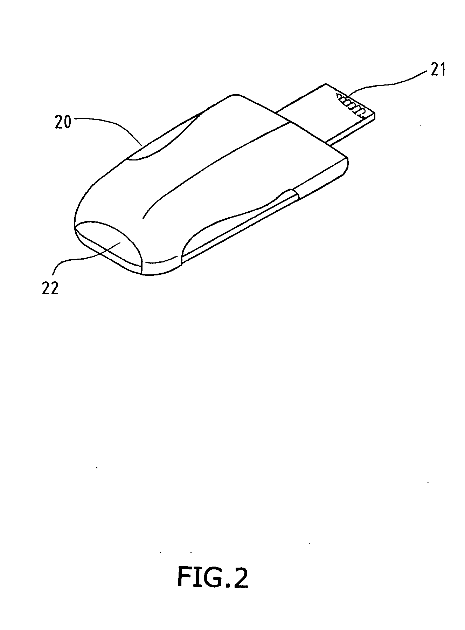

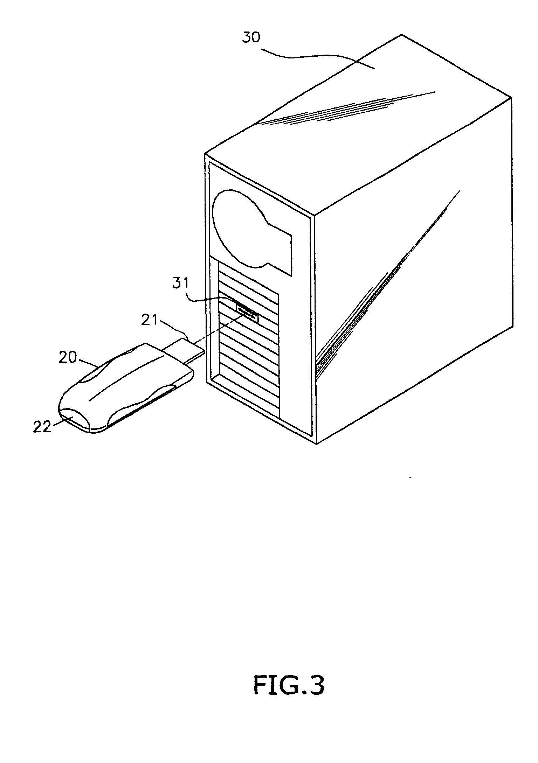

Referring to FIG. 2, the pictorial drawing of the present invention of a portable memory storage-retrieval device and FIG. 3, the pictorial and assembled drawing of the present invention applied to a computer main unit, the present invention comprises a base body (20), a universal serial bus (USB) port connecting joint (21) and a connecting device (22), wherein, a memory is built in the base body (20); the present invention is characterized that the bottom end of the said base body (20) is disposed with a USB port connecting joint (21) and the top end thereof is disposed with a connecting device (22); wherein, the said USB port connecting joint (21) can be directly inserted to a USB connecting port (31) of a computer main unit (30) or equipment; the user only has to install a driver or activate the USB port in computer output microfilmer system (COMS) beforehand for storing and retrieving information; not only the usage and detachment are simple and convenient, the volume is small; it does not require any connecting wire and is space-saving; therefore it is extremely convenient for carrying and use.

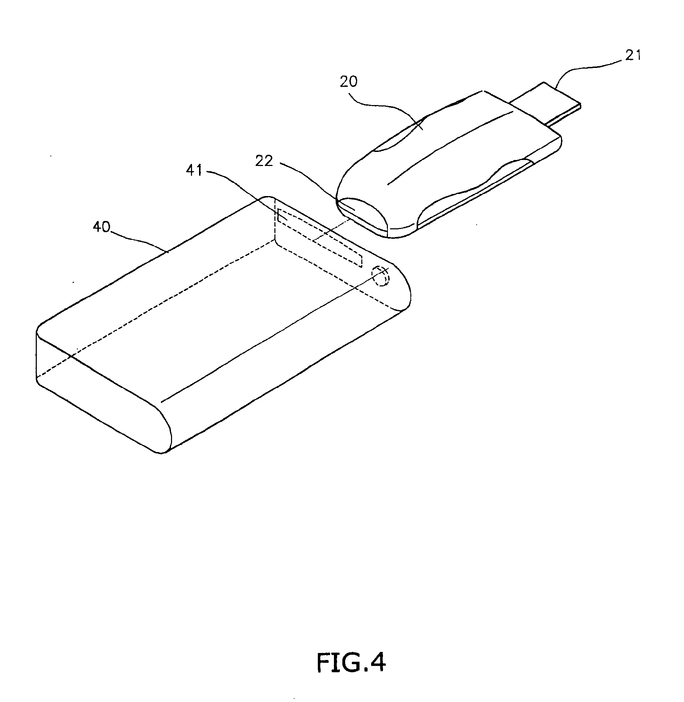

Referring to FIG. 4, the schematic drawing of the present invention assembled with a personal digital assistant (PDA), after the base body (20) is inserted into a receiving and inserting slot (41) of a PDA (40), the connecting device (22) at the top end of the said base body (20) forms an electronic connection with the said PDA (40) to make it receive digital signals and read data so as to achieve the effect of insertion for use.

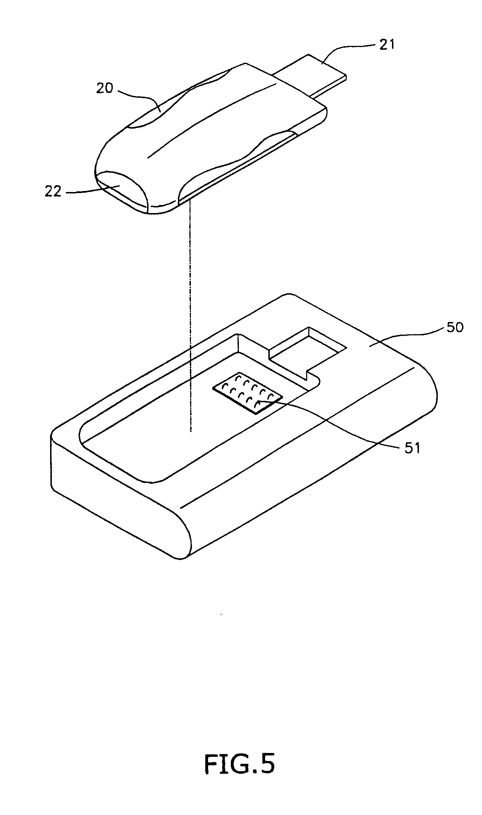

Furthermore, referring to FIG. 5, the schematic drawing of the present invention assembled with a digital music player, the said base body (20) can be inserted to various digital and electronic products for use; wherein, the connecting device can be a metal conducting tab disposed on the bottom plane (not shown) of the base body (20); when in use, it is only necessary to directly insert the base body (20) onto the digital music player (50) to make the connecting device on the bottom plane of the base body (20) and the receiving terminal end (51) on the digital music player (50) fitly press and touch each other, thereby the digital music player (50) receives the information and reads data to achieve the effect of insertion for use.

Furthermore, the said connecting device (23) can be pre-disposed as an inserting slot, an inserting foot or as a sensor-type to be disposed on the bottom plane, every lateral side or at the top end area of the base body (20); therefore, it can be adapted to various digital and electronic products for very convenient application.

It is of course to be understood that the embodiment described herein is merely illustrative of the principles of the invention and that a wide variety of modifications thereto may be effected by persons skilled in the art without departing from the spirit and scope of the invention as set forth in the following claims.

In summation of the abovementioned, the present invention of a portable memory storage-retrieval device is a rational and perfect invention, not only has excellent practicality, but also has pioneering and innovative design for the structure, the space and the style; it is also capable of increasing the user's convenience and specifically reducing the user's cost.

## Claims

1. A portable memory storage-retrieval device having a memory built in the storage and retrieval device mainly comprising a universal serial bus (USB) port connecting joint at the bottom end of the base body; the said USB port connecting joint can be directly connected to USB connecting ports of different computer main units or equipments; once inserted, it is ready for use at any time for storing and reading data; furthermore, a connecting device is disposed at ht top end of the base body for supporting and inserting to a digital camera, a personal digital assistant (PDA), a digital music player, a digital recorder and a digital video camera for data reading.

2. A portable memory storage-retrieval device according to Claim 1, wherein the said connecting device can be disposed on the bottom plane of the base body and covered on a digital product for application.

3. A portable memory storage-retrieval device according to Claim 1, wherein the said connecting device can be pre-disposed on any lateral side of the base body thereby to fit the design of the digital and electronic connection of various digital merchandises for application.
